# EUROPÄISCHE PATENTSCHRIFT

(11) **EP 3 932 269 B1**
(45) Veröffentlichungstag und Bekanntmachung des Hinweises auf die Patenterteilung: **25.01.2023**
(21) Anmeldenummer: 21180275.6
(22) Anmeldetag: 18.06.2021
(51) Int. Cl.: A47J 31/36, A47J 31/46, A47J 31/60

(54) **BRÜHEINHEIT ZUR REDUKTION DES RESTWASSERS WÄHREND DES SPÜLPROZESSES UND VERFAHREN ZUM BETRIEB EINER BRÜHEINHEIT**
BREWING UNIT FOR REDUCING THE RESIDUAL WATER DURING THE RINSING PROCESS AND METHOD FOR OPERATING A BREWING UNIT
UNITÉ DE BRASSAGE DESTINÉE À LA RÉDUCTION DE L'EAU RÉSIDUELLE PENDANT LE PROCESSUS DE RINÇAGE ET PROCÉDÉ DE FONCTIONNEMENT D'UNE UNITÉ DE BRASSAGE

(30) Priorität: 01.07.2020 DE 102020117390
(43) Veröffentlichungstag der Anmeldung: 05.01.2022
(73) Patentinhaber: Eugster/Frismag AG, 8580 Amriswil (CH)
(72) Erfinder: RIESSBECK, Wolfgang, 8597 Landschlacht (CH); WÄGER, Simon, 8580 Amriswil (CH); JENNY, Dominic, 9100 Herisau (CH)
(74) Vertreter: Patent- und Rechtsanwälte Behrmann Wagner PartG mbB

(56) Entgegenhaltungen:
- DE-A1-102016 104 020
- US-A1- 2007 012 194

## Beschreibung

Die vorliegende Erfindung betrifft eine Brüheinheit für eine Getränkezubereitungsvorrichtung, eine Getränkezubereitungsvorrichtung mit entsprechender Brüheinheit sowie ein Verfahren zum Betrieb einer Brüheinheit für eine Getränkezubereitungsvorrichtung.

Bei gattungsgemäßen Getränkezubereitungsvorrichtungen, beispielsweise Kaffee- und/oder Espressomaschinen sowie Kaffee- und/oder Espressovollautomaten, kommen bereits Brüheinheiten in verschiedenen Ausgestaltungen zum Einsatz. Die Brüheinheit übernimmt dabei die Funktion ein Getränkesubstrat, beispielsweise Kaffeepulver oder gemahlenen Kaffee, in einer ersten Stellung aufzunehmen, beispielsweise an einem Auslass oder Ausgang eines Mahlwerks oder einer Mühle, das Getränkesubstrat zu verdichten, mit einem Brühfluid zu versetzen oder auszulaugen. Weiter dient die Brüheinheit dazu im Anschluss an einen Brühvorgang oder zum Abschluss eines Brühvorgangs das aufgebrühte oder ausgelaugte Getränkesubstrat auszuwerfen, bevorzugt in eine Sammel- oder Auffangschale und nach dem Auswurf des Getränkesubstrats, zu Beginn der Inbetriebnahme der Getränkezubereitungsvorrichtung sowie ggf. zu zwischenzeitlich routinemäßig anfallenden Reinigungs- oder Hygienezeitpunkten eine das Getränkesubstrat aufnehmende Brühkammer zu reinigen, insbesondere zu spülen.

Der letztgenannte Spülprozess, Spülvorgang oder Reinigungsvorgang dient dazu in der Brühkammer ungewollt verbleibende Reste von Getränkesubstrat und/oder Getränke zu entfernen und insgesamt die Brühkammer dauerhaft in einem hygienischen und einer Keimentwicklung oder sonstigen Gesundheitsgefahr vorbeugenden Verfassung oder einem entsprechenden Zustand zu behalten.

Zu diesen Zwecken verfügen die bekannten Brüheinheiten über Brühkammern, die entsprechend zwischen verschiedenen Positionen oder Stellungen innerhalb der Brüheinheit bewegt oder verstellt werden können. In verschiedene Positionen oder Stellungen der Brühkammern, nämlich insbesondere in einer Brühstellung zur Aufbrühung des Getränkesubstrats und in einer Spülstellung zur Durchführung des vorangehend genannten Spülprozesses, ist dabei in an sich bekannter Weise vorgesehen, dass eine Öffnung der Brühkammer mit einem Brühkopf verschlossen und abgedichtet wird, wozu eine Bewegung oder Verstellung der Brühkammer und des Brühkopfes zueinander bewirkt wird.

Um jedoch eine variable Menge von Getränkesubstrat verarbeiten oder aufbrühen zu können und gleichzeitig im oben genannten Verfahrensschritt des Verdichtens des Getränkesubstrats einen möglichst reproduzierbaren Verdichtungszustand des Getränkesubstrats, unabhängig von der Menge des Getränkesubstrats, zu ermöglichen, sehen die aus dem Stand der Technik bekannten Brüheinheiten in der Regel vor, dass eine elastische, bevorzugt durch Federmittel oder elastische Verformungsmittel ermöglichte Relativverstellung des Brühkopfes gegenüber der Brühkammer oder umgekehrt erfolgen kann oder vorgesehen ist, die in der Regel dazu dient, beim Überführen der Brühkammer in die Brühstellung eine möglichst gleichmäßige Verdichtung eines Getränkesubstrats zu erreichen, auch wenn unterschiedliche Mengen an Getränkesubstrat in der Brühkammer angeordnet oder aufgenommen sind.

Auf die Anmelderin geht dabei ein Konzept einer Brüheinheit zurück, bei der mittels einer Drehbewegung einer Kurbelwelle die Brühkammer zur Erreichung der Brüh- oder Spülstellung in Richtung eines federnd gelagerten Brühkopfes oder Brühkolben bewegt wird. Der Nachteil einer Lösung unter Einsatz eines federgelagerten Brühkopfes oder Brühkolbens, wie er beispielsweise in der EP 1 217 925 B1 beschrieben ist, besteht einerseits in einem verhältnismäßig großen Bauraum, der für den federnd gelagerten Brühkopf benötigt wird und entweder eine negative Auswirkung auf die Kompaktheit oder den Raumbedarf der Brüheinheit ausübt oder alternativ einen negativen Einfluss auf eine gleichmäßige oder vielmehr ungleichmäßige Verdichtung des Getränkesubstrats abhängig von der Menge des Getränkesubstrats ausübt, wenn zum Vermeiden eines unnötig großen Bauraums kurze, verhältnismäßig starre Federn oder Federmittel, insbesondere Wendelfedern, verwendet werden, um den federnd gelagerten Brühkopf zu realisieren.

Abgesehen von der nachteiligen Wirkung auf entweder Bauraum oder Verdichtungsverhalten, hat die aus dem Stand der Technik bekannte Realisierung eines insgesamt federnd gelagerten Brühkopfes noch den Nachteil, dass bei dem Spülprozess oder Spülvorgang der Brühkopf, einschließlich eines ggf. daran vorgesehenen und in die Brühkammer eingetauchten oder eingeführten Brühkolbens beim Spülvorgang vollständig zurückfedert und dabei das Volumen der Brühkammer vergrößert wird, indem unter Druck in die Brühkammer eingeführtes oder eingepresstes Spül- oder Reinigungsfluid, bevorzugt Wasser, den Innendruck in der geschlossenen oder verschlossenen Brühkammer erhöht. Da jedoch zum effektiven Reinigen oder Spülen der Brühkammer eine vollständige Füllung der verschlossenen Brühkammer mit Spülfluid sinnvoll oder sogar notwendig ist, führt der federnd gelagerte Brühkopf aus dem Stand der Technik dazu, dass pro Spülvorgang oder pro Spülprozess eine verhältnismäßig große Menge oder ein verhältnismäßig großes Volumen von Spülfluid verbraucht wird, welches im Anschluss an den Spülvorgang regelmäßig einer der Getränkezubereitungsvorrichtung zugeordneten oder von dieser umfassten Auffangschale zugeführt und von dieser zumindest zeitweise bevorratet werden muss. Abhängig von der Anzahl der durchgeführten Spülzyklen resultiert daraus eine entsprechend große Menge an Restfluid oder Restwasser. Dies wiederum führt zu dem Problem, dass bei der Auslegung entsprechender Getränkezubereitungsvorrichtungen entweder große Bevorratungseinrichtungen für Spülfluid, insbesondere Wasser, sowie entsprechend große Auffangschalen vorgesehen werden müssen, die ihrerseits hygienisch evtl. problematisch sein können. Alternativ können kleiner dimensionierte Bevorratungseinrichtungen und Auffangschalen vorgesehen oder realisiert werden, was dann jedoch zu dem Problem führt, dass der Benutzer häufig die entsprechenden Einrichtungen entleeren oder wieder befüllen muss.

US 2007/012194 A1 zeigt eine Espressomaschine mit einer Espressobrüheinheit, die ein Cremaventil und eine Kaffeeauslaufleitung aufweist, wobei zur Vermeidung von auslaufendem Restkaffee zwischen dem Cremaventil und dem Kaffeeauslauf eine Rücksaugeinheit in fluidleitender Verbindung mit der Auslaufleitung steht, die selbsttätig nach Beendigung eines Brühvorgangs aktiviert wird.

DE 10 2016 104020 A1 offenbart einen Heißgetränkebereiter mit Brüheinheit, Brühkammer und Brühsieb, wobei ein Ventilmittel dem Brühsieb strömungstechnisch nachgeschaltet ist, das aufgrund eines Fluiddrucks des aus der Brühkammer austretenden Fluids zu öffnen ist. Um individuell die gewünschten Brüheigenschaften anzupassen, umfasst das Ventilmittel ein Verstellmittel mit dem der Fluiddruck zum Öffnen des Ventils verändert werden kann.

Ausgehend von diesem Stand der Technik ist es deshalb die Aufgabe der vorliegenden Erfindung eine Brüheinheit, eine Getränkezubereitungsvorrichtung sowie ein Verfahren zum Betreiben einer Brüheinheit vorzuschlagen, die die Nachteile im Stand der Technik überwindet und insbesondere die Menge oder das Volumen an benötigtem Spülfluid zur Durchführung eines Spülvorgangs reduziert und dabei in besonders bevorzugter Weise eine kompakte Bauform oder Bauweise der gesamten Brüheinheit ermöglicht. Diese Aufgabe wird im Hinblick auf die Brüheinheit mit den Merkmalen des unabhängigen Anspruchs 1 gelöst. Bezogen auf die Getränkezubereitungsvorrichtung wird diese Aufgabe mit den Merkmalen des Anspruchs 12 gelöst. Ein erfindungsgemäßes Verfahren ist im Anspruch 13 angegeben. Vorteilhafte Ausgestaltungen und Ausführungsformen sind Gegenstand der Unteransprüche sowie der nachfolgenden Beschreibung und der Zeichnungen.

Für die erfindungsgemäße Brüheinheit für Getränkezubereitungsvorrichtungen, insbesondere Kaffee- und/oder Espressomaschinen oder -Vollautomaten ist dabei gattungsgemäß vorgesehen, dass sie über eine mit einer An-triebs- oder Verstelleinrichtung zwischen unterschiedlichen Betriebsstellungen verstellbaren Brühkammer verfügt, die zur Aufnahme eines Getränkesubstrats, insbesondere gemahlenem Kaffee oder Kaffeepulver, über eine Öffnung der Brühkammer eingerichtet ist sowie mit einem Brühkopf, der zumindest in einer Brühstellung und einer Spülstellung der Brühkammer in die Öffnung der Brühkammer, bevorzugt mit einem vorstehenden Brühkolben, zumindest teilweise eingeführt angeordnet ist und eine Fluidauslassöffnung, insbesondere an einer Stirnseite des Brühkolbens aufweist, welche mit einem Druck- oder Überdruckventil zusammenwirkend vorgesehen ist, welches beim Erreichen eines Grenzdrucks innerhalb einer verschlossenen Brühkammer öffnet und den Abfluss von Fluid aus der Brühkammer ermöglicht.

Erfindungsgemäß ist vorgesehen, dass das Druck- oder Überdruckventil mit einem mechanischen Öffnungsmechanismus zur Zwangsöffnung des Druck- oder Überdruckventils unabhängig vom Druck in der Brühkammer zusammenwirkend ausgebildet ist, wobei die Brühkammer derart ausgebildet und angeordnet ist, dass beim Unterschreiten einer Mindestmenge an Getränkesubstrat in der Brühkammer beim Verstellen der Brühkammer in Richtung der Spülstellung vor dem Erreichen der Spülstellung eine Auslösefläche des Öffnungsmechanismus mit der Brühkammer in Kontakt kommt und beim weiteren Verstellen der Brühkammer in Richtung der Spülstellung eine Kraftübertragung von der Brühkammer über die Auslösefläche auf den Öffnungsmechanismus bewirkt, sodass beim Erreichen der Spülstellung der Brühkammer das Druck- oder Überdruckventil in eine druckunabhängige Zwangsöffnungsstellung überführt wurde.

Durch die erfindungsgemäße Ausgestaltung der Brüheinheit wird erreicht, dass beim Verstellen oder Verfahren der Brühkammer in die Spülstellung eine Zwangsöffnung des Druck- oder Überdruckventils durch eine mechanische Kraftübertragung bewirkt wird, die dafür sorgt, dass das besagte Druck- oder Überdruckventil zu Beginn des Spülvorgangs bereits geöffnet ist oder in einem Öffnungszustand befindlich ist, sodass ein unter Druck in die Brühkammer einströmendes Spülfluid oder Reinigungsfluid keinen Druck oder Überdruck in der Brühkammer aufbauen kann und somit auch keine Vergrößerung des Volumens der Brühkammer bewirken kann.

Damit kann insgesamt zur Spülung der gesamten Brühkammer oder zur Füllung der gesamten Brühkammer mit Spülfluid ein verhältnismäßig geringes Volumen oder eine verhältnismäßig geringe Menge eingesetzt werden, ohne das Reinigungsergebnis oder Spülergebnis nachteilig zu beeinträchtigen. Die Grundidee der Erfindung liegt also in einer deutlichen Verkleinerung des Volumens der Brühkammer vor dem Durchführen einer Spülung zusammen mit der Zwangsöffnung ein Auslassöffnung, so dass während des Spülvorgangs kein Überdruck in der Brühkammer aufgebaut werden kann, der das Brühkammervolumen vergrößert.

In diesem Zusammenhang ist es ebenfalls besonders vorteilhaft, dass der Öffnungsmechanismus dem Druck- oder Überdruckventil und damit insgesamt dem Brühkopf zugeordnet ist. Dies bedeutet, dass zum Betätigen des Öffnungsmechanismus und zum Überführen des Druck- oder Überdruckventils in die zwangsgeöffnete Stellung über eine Betätigung des Öffnungsmechanismus durch die Brühkammer eine entsprechende Nähe zwischen Brühkammer einerseits und Brühkopf andererseits hergestellt werden muss oder zumindest hergestellt werden kann. Diese Nähe wiederum führt jedoch bereits dazu, dass der Brühkopf, insbesondere ein vorstehender Brühkolben, tief oder verhältnismäßig tief in die Brühkammer eingeführt wird und somit ebenfalls das Volumen der verschlossenen Brühkammer weiter reduziert. Beim Eintauchen des Brühkopfes oder Brühkolbens in die Öffnung wird die Brühkammer verschlossen und abgedichtet, wobei das Volumen oder verbleibende Volumen der verschlossenen Brühkammer von der Relativpositionierung von Brühkammer und Brühkopf abhängt. Besonders vorteilhaft daran ist ebenfalls, dass durch Dichtmittel oder Dichtungen im Bereich des Brühkopfes Verschmutzungen, Anhaftungen und Getränkesubstratrückstände im oberen Bereich der Brühkammer oder des Brühkammermantels durch das Einführen oder Eintauchen des Brühkopfes in die Brühkammer bereits gelöst und in das durch das Eintauchen oder Einführen verkleinerte Volumen der Brühkammer überführt werden.

Insgesamt ermöglicht also die Ausgestaltung des Brühkopfes mit einem Druck- oder Überdruckventil mit einem mechanischen Öffnungsmechanismus zur Zwangsöffnung des Ventils, der durch eine mechanische Kontaktierung und Kraftübertragung durch die Brühkammer betätigt oder ausgelöst wird dazu, dass pro Spülprozess oder Spülvorgang der Brühkammer nur ein sehr geringes Volumen an Spülfluid, insbesondere Wasser, verbraucht wird, was einerseits eine sehr vorteilhafte Auswirkung auf die Dimensionierung der Bevorratungseinrichtungen und Auffangeinrichtungen, insbesondere auf den Wassertank und die **Auffangschale** ausübt und darüber hinaus, wie im Rahmen der nachfolgenden Beschreibung noch deutlicher werden wird, eine besonders kompakte Konstruktion der Brüheinheit ermöglicht.

Als Mindestmenge an Getränkesubstrat soll dabei die Menge verstanden werden, die von der jeweiligen Getränkezubereitungsvorrichtung mindestens erzeugt oder in die Brüheinheit überführt wird, um ein Getränk zuzubereiten. Diese Menge kann entweder geräteseitig vorgegeben sein oder aber benutzerseitig beeinflussbar oder bestimmbar sein. Es soll sich bei der Mindestmenge jedoch gerade nicht über Restmengen oder zufällige Mengen handeln, die unbeabsichtigt, also ohne dem Ziel einer Getränkezubereitung in der Brühkammer angeordnet sind oder in der Brühkammer zurückbleiben. Beim Vorsehen der besagten Mindestmenge an Getränkesubstrat in der Brühkammer würde nämlich in vorteilhafter oder bevorzugter Weise das Getränkesubstrat selbst dazu führen, dass die Annäherung zwischen Brühkammer einerseits und Brühkopf andererseits beim Verstellen der Brühkammer, beispielsweise in eine Brühstellung oder eine Spülstellung gestoppt oder gehemmt wird, bevor die Brühkammer den Öffnungsmechanismus betätigen oder auslösen könnte. Stattdessen würde ein Kontaktieren des Brühkopfes mit dem in der Brühkammer angeordneten Getränkesubstrat erfolgen und bei weiterer Verstellung der Brühkammer gegenüber dem Brühkopf, oder umgekehrt, eine Verdichtung des Getränkesubstrats erfolgen, wobei die Vorrichtungskomponenten so auf die besagte Mindestmenge des Getränkesubstrats abzustimmen wären oder abgestimmt sind, dass eben gerade verhindert wird, dass beim Verdichten einer Mindestmenge an Getränkesubstrat in der Brühkammer, durch eine Anpressoberfläche des Brühkopfes, die Brühkammer dem Brühkopf derart nahekommt oder so stark angenähert wird, dass der Öffnungsmechanismus des Druck- oder Überdruckventils betätigt oder ausgelöst wird.

Gemäß einer ersten, besonders vorteilhaften Ausführungsform der Brüheinheit kann vorgesehen sein, dass der Brühkopf starr, bevorzugt ungefedert, ausgebildet und in der Brüheinheit angeordnet ist. Dies kann, wie einleitend bereits angedeutet, dazu führen, dass der vorzusehende Bauraum oder der notwendige Bauraum der Brüheinheit reduziert wird. Die notwendige, elastisch reversible oder federnde Relativverstellung zwischen Brühkammer und Brühkopf, die u.a. notwendig und gewünscht ist, um eine Anpressung oder Verdichtung von Getränkesubstrat, insbesondere beim Vorsehen von mindestens einer Mindestmenge an Getränkesubstrat, in der Brühkammer zu erreichen, kann dann, wie nachfolgend noch detaillierter beschrieben werden wird, durch eine federnde Lagerung der Brühkammer gegenüber einem Brühkammerträger realisiert werden. Bevorzugt ist dabei die gesamte Brühkammer, nämlich ein Brühkammermantel und ein daran angrenzender und bevorzugt einstückig mit dem Brühkammermantel ausgebildeter Brühkammerboden federnd über elastische Verformungsmittel gegenüber dem Brühkammerträger gelagert. Die Details und Vorteile einer vollständig federnd gelagerten Brühkammer sind auch in der Patentanmeldung **XYZ** der Anmelderin beschrieben. Auf die Beschreibung wird hiermit Bezug genommen und die dazugehörige Offenbarung durch Verweis in die vorliegende Offenbarung miteinbezogen.

Gemäß einer weiteren, bevorzugten Ausführungsform der Brüheinheit kann vorgesehen sein, dass das Druck- oder Überdruckventil einen, bevorzugt im Brühkopf, federgelagerten Ventilträger aufweist, der einen Ventilkörper in Richtung auf einen, bevorzugt durch in einer Stirnfläche eines Brühkolbens gebildeten Ventilsitz kraftbeaufschlagt. Diese Ausgestaltung des Druck- oder Überdruckventils sorgt dafür, dass im Brühvorgang oder während des Brühvorgangs das Druck- oder Überdruckventil, welches allgemein auch als Cremaventil bezeichnet werden kann, erst dann öffnet, wenn in der verschlossenen Brühkammer ein entsprechender Überdruck erzeugt und zumindest kurzfristig aufrechterhalten wird. Denn dann hebt der Überdruck in der Brühkammer, bevorzugt ausgelöst durch unter Druck in die Brühkammer gefördertes Brühfluid den Ventilkörper entgegen einer Federvorspannung auf den Ventilträger vom Ventilsitz ab, sodass das Druck- oder Überdruckventil geöffnet und damit die Fluidauslassöffnung im Brühkopf freigegeben wird. Dadurch kann dann während des Brühvorgangs das aufgebrühte Getränk aus der Brühkammer abfließen.

In besonders vorteilhafter Weise kann dabei vorgesehen sein, dass sich der erfindungsgemäße Öffnungsmechanismus zum größten Teil oder weitestgehend die bereits zur Realisierung des Druck- oder Überdruckventils vorgesehenen Gerätekomponenten oder Vorrichtungsmerkmale zu eigen macht oder mitbenutzt, um die mechanische Zwangsöffnung des Druck-oder Überdruckventils zu erreichen.

Besonders bevorzugt kann in diesem Zusammenhang vorgesehen sein, dass der Öffnungsmechanismus kraftschlüssig mit dem Ventilträger verbunden und bevorzugt einstückig mit dem Ventilträger ausgebildet ist. Dies führt dazu, dass insbesondere die Federmittel, die zur federgelagerten Anordnung des Ventilträgers und zur druckfreien Schließung oder zum druckfreien Verschluss des Ventils führen gleichfalls oder gleichermaßen genutzt werden können, um als Widerlager oder als Rückstellmechanismus für den Öffnungsmechanismus zu fungieren. Denn nur wenn über die kraftschlüssige Verbindung zwischen Öffnungsmechanismus und Ventilträger eine entsprechende Rückstellkraft, die größer ist als die von den Federmitteln aufgebrachte Kraft zur Anpressung des Ventilkörpers auf den Ventilsitz, aufgebracht wird, kann entgegen der Rückstellung durch die Federmittel der Öffnungsmechanismus ein Verstellen des Ventilträgers bewirken, indem vonseiten der Brühkammer Kraft auf den Öffnungsmechanismus und von diesem wiederum auf den Ventilträger ausgeübt wird.

Weiterhin besonders bevorzugt kann vorgesehen sein, dass der Öffnungsmechanismus durch wenigstens einen Flügel oder Arm des Ventilträgers gebildet wird, der bevorzugt aus einer der Brühkammer zugewandten Öffnung des Brühkopfes, besonders bevorzugt radial außerhalb des Brühkolbens, heraustragt. Vorteilhaft kann vorgesehen sein, dass zwei, dem Brühkolben auf gegenüberliegenden Seiten angeordnete Flügel oder Arme des Ventilträgers den Öffnungsmechanismus ausbilden und durch entsprechende Öffnungen aus dem Brühkopf herausgeführt werden. Dadurch wird eine symmetrische und gleichmäßige Kraftübertragung von der Brühkammer auf den Öffnungsmechanismus gewährleistet. Der Öffnungsmechanismus kann beim Herausführen aus dem Brühkopf durch eine radial außerhalb zum Brühkolben angeordnete, der Brühkammer zugewandte Öffnung des Brühkopfes in den Brühkopf integriert und gleichzeitig von externer, insbesondere vonseiten der Brühkammer mechanisch kontaktiert und/oder ausgelöst werden, wobei dadurch insbesondere keinerlei mechanische Umlenkungen, Hebel od. dgl. aufzubringen sind. Vielmehr kann besonders bevorzugt eine lineare Verstellung der Brühkammer zur Erreichung oder Verstellung in die Spülstellung direkt oder in gleicher Richtung wirkend über den Öffnungsmechanismus auf den Ventilträger und damit auf das Druck- oder Überdruckventil übertragen werden.

Ebenfalls kann besonders vorteilhaft vorgesehen sein, dass, wie oben bereits erwähnt, die Brühkammer über elastische Verformungsmittel, bevorzugt mehrere Federn, besonders bevorzugt über mehrere Wendelfedern, mit einem Brühkammerträger verbunden und von diesem beweglich beabstandet ist. Diese Ausführungsform führt zu einer besonders kompakten Ausgestaltung der gesamten Brüheinheit, da bei gattungsgemäßen Brüheinheiten ohnehin verhältnismäßig viel Bauraum zwischen, beispielsweise einer Kurbelwelleneinrichtung zur Verschwenkung und Linearverstellung der Brühkammer und der Brühkammer vorzusehen ist. Dieser notwendige Bauraum kann besonders bevorzugt zur Anordnung der elastischen Verformungsmittel verwendet werden, was dann wiederum in besonders vorteilhafter Weise ermöglicht, dass diese Verformungsmittel in der Vorbereitung und während des Brühvorgangs genutzt werden, um Getränkesubstrat reproduzierbar zu verdichten, um im Rahmen des Brühvorgangs ein konstant reproduzierbares Volumen der Brühkammer zu erreichen und um darüber hinaus im Anschluss oder zum Abschluss des Brühvorgangs ein erneutes Verdichten, Auspressen von ausgelaugtem Getränkesubstrat oder Trester zu erreichen.

Insgesamt ist die erfindungsgemäße Ausführung der Brüheinheit auch mit einem federgelagerten Brühkopf möglich. In diesem kann dann auch bei einer nicht federgelagerten oder federgespannten Brühkammer das Öffnen oder Zwangsöffnen des Druck- oder Überdruckventils erreicht werden, ohne dass der Brühkopf einfedert oder zurückfedert und damit das Volumen der Brühkammer im Spülprozess vergrößert. Zur Optimierung des Bauraums und zur Verbesserung des Anpress- oder Verdichtungsverhaltens von Getränkesubstrat in der Brühkammer ist jedoch eine federgelagerte Anordnung der Brühkammer, insbesondere der gesamten Brühkammer einschließlich Boden und Mantel, vorteilhaft gegenüber einer federgelagerten Anordnung des Brühkopfes in der Brüheinheit.

Dabei ist jedoch im Zusammenhang mit der vorliegenden Erfindung gerade unerwünscht, dass während des Spülvorgangs die elastischen Verformungsmittel ein Einfedern oder Zurückfedern der Brühkammer gegenüber dem Brühkammerträger ermöglichen, da dieses Einfedern oder Zurückfedern der Brühkammer in unerwünschter Weise das Volumen der Brühkammer während des Spülvorgangs vergrößern und damit die Menge oder das Volumen an Spülfluid pro Spülzyklus oder Reinigungszyklus vergrößern würde. Das Einfedern oder Verformen der elastischen Verformungsmittel zwischen Brühkammer einerseits und Brühkammerträger andererseits kann beispielsweise durch eine mechanische Festlegung der Brühkammer oder durch eine entsprechende Arretierung der Brühkammer in der Spülstellung gewährleistet werden.

Alternativ und gleichermaßen vorteilhaft kann dies jedoch auch dadurch gewährleistet werden, dass insgesamt die Kräfte zur mechanischen Zwangsöffnung des Druck- oder Überdruckventils durch eine Annäherung der Brühkammer gegenüber dem Brühkopf und eine entsprechend mechanische Kontaktierung und Aktivierung des dem Brühkopf zugeordneten Öffnungsmechanismus des Druck- oder Überdruckventils geringer ausfällt, als die Kraft, die zur Verformung und damit zur Einfederung der elastischen Verformungsmittel zwischen Brühkammer und Brühkammerträger benötigt wird.

In diesem Zusammenhang kann besonders vorteilhaft vorgesehen sein, dass der Ventilträger durch Federmittel federgelagert wird, deren Gesamtrichtgröße zwischen 2,0 N/mm und 3,0 N/mm betragen. Dadurch kann in vorteilhafter Weise einerseits erreicht werden, dass bei üblichen Abmessungen von Brühkammer und Brühkopf das Druck- oder Überdruckventil in einem Überdruckbereich öffnet, der ein qualitativ hochwertiges Getränk ermöglicht oder unterstützt und gleichzeitig kann, ohne dass ein Einfedern oder Rückfedern der Brühkammer hingenommen werden oder befürchtet werden muss, erreicht werden, dass die mechanische Zwangsöffnung des Druck- oder Überdruckventils erfolgen kann, indem beispielsweise die Brühkammer eine Kraft auf den Öffnungsmechanismus überträgt.

Weiterhin kann besonders vorteilhaft vorgesehen sein, dass die Gesamtrichtgröße des Druck- oder Überdruckventils, und damit auch die Gesamtkraft, zum Abheben des Ventilkörpers vom Ventilsitz, bevorzugt einschließlich des mechanischen Öffnungsmechanismus und etwaiger Haftkräfte zwischen Ventilkörper und Ventilsitz geringer, bevorzugt weniger als halb so groß ist, wie die Gesamtrichtgröße der elastischen Verformungsmittel zwischen Brühkammer und Brühkammerträger sowie der ebenfalls daraus resultierenden Gesamtkraft zur Verstellung der Brühkammer gegenüber dem Brühkammerträger und elastischer Verformung der Verformungsmittel.

Dadurch wird sichergestellt, dass die mechanische Zwangsöffnung reproduzierbar und zuverlässig erfolgen kann, ohne dass eine Vergrößerung des Brühkammervolumens dadurch bewirkt wird, dass beim Betätigen des Öffnungsmechanismus gleichzeitig auch eine Verstellung der Brühkammer gegenüber dem Brühkammerträger verursacht wird.

Besonders vorteilhaft kann vorgesehen sein, dass das elastische Verformungsmittel eine gesamte Richtgröße von 6,0 N/mm bis 8,0 N/mm, bevorzugt von 6,5 N/mm bis 7,5 N/mm, aufweist.

Dadurch kann sowohl ein zuverlässiges Öffnen des mechanischen Öffnungsmechanismus zur Zwangsöffnung des Druck- oder Überdruckventils und gleichzeitig ein vorteilhaftes Verhalten der Brühkammer vor, während und nach des Brühvorgangs und damit zusätzlich zum Spülvorgang gewährleistet werden. Denn durch die Wahl der gesamten Richtgröße im vorangehend genannten Bereich können vorteilhaft reproduzierbare Anpresskräfte zur Verdichtung einer Mindestmenge von Getränkesubstrat und weitere Vorteile erreicht werden. In diesem Zusammenhang wird auf die oben bereits genannte parallele Anmeldung der Anmelderin verwiesen und die entsprechende Offenbarung durch Verweis miteinbezogen.

Weiterhin kann vorgesehen sein, dass der Brühkammerträger mit einer Kurbelwelleneinheit verbunden ist, wobei die Verbindung derart ausgestaltet ist, dass die Kurbelwelleneinheit, je nach Rotation oder Rotationszustand, eine Kippbewegung oder Linearverstellung des Brühkammerträgers und der Brühkammer bewirkt. Bei derartig ausgestalteten Brüheinheiten ist der wie oben bereits erwähnte, verhältnismäßig großzügige Bauraum zwischen Kurbelwelleneinheit oder Brühkammerträger einerseits und Brühkammer andererseits gegeben, sodass bevorzugt die elastischen Verformungsmittel zwischen Brühkammerträger und Brühkammer angeordnet werden können.

Weiterhin kann besonders vorteilhaft vorgesehen sein, dass die Kurbelwelleneinheit und/oder der Brühkammerträger zum Erreichen der Spülstellung und zum Erreichen der Brühstellung die gleiche Position oder die gleichen Positionen einnehmen. Dies hat verschiedene Vorteile. Einerseits kann die Ansteuerung der Kurbelwelleneinheit oder der Antrieb der Kurbelwelleneinheit über die Antriebs- oder Verstelleinrichtung vereinfacht werden, indem sowohl für die Erreichung der Brühstellung als auch für die Erreichung der Spülstellung lediglich eine Zielposition oder Endposition definiert, angesteuert und erreicht werden muss. Darüber hinaus kann in vorteilhafter Weise jedoch auch sichergestellt werden, dass gerade in der Brühkammer befindliche oder eben nicht befindliche Menge oder Volumen von Getränkesubstrat darüber entscheidet, ob entweder eine Brühstellung erreicht werden kann oder vielmehr eine Spülstellung erreicht werden kann.

Denn beim Überschreiten der Mindestmenge an Getränkesubstrat in der Brühkammer wird der Kontakt zwischen Brühkopf, insbesondere Brühkolben und Getränkesubstrat, bevorzugt bereits vor dem Erreichen der Brühstellung, dafür sorgen, dass bis zum Erreichen der Brühstellung der Brühkammer ein entsprechender Mindestabstand zwischen der Brühkammer und dem Öffnungsmechanismus des Druck- oder Überdruckventils verbleibt, wohingegen beim Unterschreiten der Mindestmenge an Getränkesubstrat beim Erreichen oder beim Annähern an eine Endstellung der Brühkammer das nicht in der Brühkammer befindliche Getränkesubstrat oder das zumindest nur in Restmengen unterhalb der Mindestmenge in der Brühkammer befindliche Getränkesubstrat dafür sorgt, dass einerseits der Brühkopf sehr tief in die Brühkammer eingeführt wird und damit das Volumen der Brühkammer im verschlossenen Zustand weiter verringert und gleichzeitig dazu führt, dass die Brühkammer mit dem Öffnungsmechanismus in Kontakt kommt und bis zum Erreichen der Spülstellung, respektive Brühstellung, der Brühkammer der Öffnungsmechanismus das Druck- oder Überdruckventil in eine zwangsgeöffnete Stellung überführt hat, sodass unter Einsatz eines sehr geringen Volumens an Spülfluid der Spülvorgang durchgeführt werden kann.

Im Hinblick auf eine Getränkezubereitungsvorrichtung, insbesondere eine Kaffee- und/oder Espressomaschine, wird die eingangs genannte Aufgabe dadurch gelöst, dass die Getränkezubereitungsvorrichtung eine Brüheinheit gemäß einer der vorangehend beschriebenen Ausführungsformen aufweist.

Im Hinblick auf das erfindungsgemäße Verfahren zum Betrieb einer Brüheinheit für eine Getränkezubereitungsvorrichtung, insbesondere einer Kaffee- und/oder Espressomaschine, insbesondere im Hinblick auf ein Verfahren zum Durchführen eines Spülvorgangs einer Brüheinheit wird die oben genannte Aufgabe dadurch gelöst, dass in grundsätzlich bekannter Art und Weise ein Verstellen einer Brühkammer, die zur Aufnahme eines Getränkesubstrats, insbesondere gemahlenem Kaffee oder Kaffeepulver über eine Öffnung der Brühkammer eingerichtet ist, aus einer Entladestellung oder Ruhestellung in eine Spülstellung mittels einer Antriebs- oder Verstelleinrichtung verstellt wird. Weiterhin wird in gattungsgemäßer Art und Weise ein Verfahrensschritt durchgeführt, der das Verschließen der Brühkammer, insbesondere der Öffnung der Brühkammer mittels eines Brühkopfes bewirkt, bei dem ein Verstellen der Brühkammer in die Spülstellung den Brühkopf in die Öffnung der Brühkammer, bevorzugt mit einem vorstehenden Brühkolben, zumindest teilweise, einführt. Ebenfalls in grundsätzlich bekannter Art wird weiterhin in einem Verfahrensschritt das Spülen der verschlossenen Brühkammer mit Spülfluid durchgeführt, wobei eine im Brühkopf, insbesondere an einer Stirnseite des Brühkolbens, angeordnete Fluidauslassöffnung, welche mit einem Druck- oder Überdruckventil zusammenwirkend vorgesehen ist, welches beim Erreichen eines Grenzdrucks innerhalb einer verschlossenen Brühkammer öffnet und den Abfluss von Fluid aus der Brühkammer ermöglicht geöffnet wird.

Erfindungsgemäß ist dabei jedoch vorgesehen, dass das Druck- oder Überdruckventil mit einem mechanischen Öffnungsmechanismus zur Zwangsöffnung des Druck- oder Überdruckventils unabhängig vom Druck in der Brühkammer zusammenwirkend ausgebildet ist, wobei die Brühkammer beim Unterschreiten einer Mindestmenge an Getränkesubstrat in der Brühkammer beim Verstellen der Brühkammer in Richtung der Spülstellung vor dem Erreichen der Spülstellung an einer Auslösefläche des Öffnungsmechanismus zur Anlage kommt und beim weiteren Verstellen der Brühkammer in Richtung der Spülstellung eine Kraftübertragung von der Brühkammer über die Auslösefläche auf den Öffnungsmechanismus bewirkt, sodass beim Erreichen der Spülstellung der Brühkammer das Druck- oder Überdruckventil in eine druckunabhängige Zwangsöffnungsstellung überführt wird.

Damit kann, wie oben bereits ausführlich im Zusammenhang mit der erfindungsgemäßen Brüheinheit beschrieben, eine Spülung der Brühkammer, beispielsweise im Rahmen einer Inbetriebnahme der Getränkezubereitungsvorrichtung oder im Anschluss an ein Auswerfen von Getränkesubstrat-Trester nach Durchführen eines Brühvorgangs, durchgeführt werden, der nur ein Mindestmaß oder ein minimales Volumen an Spülfluid benötigt, sodass auch bei moderater Dimensionierung von Bevorratungseinrichtungen, insbesondere Wassertank, und Auffangeinrichtungen, insbesondere Auffangschale, nur selten ein Auffüllen oder Ausleeren der besagten Komponenten der Getränkezubereitungsvorrichtung nötig wird. Gleichzeitig wird insgesamt der Verbrauch von Spülfluid, insbesondere Wasser, reduziert, wodurch die Getränkezubereitungsvorrichtung, respektive die Brüheinheit, ressourcenschonend, insbesondere wassersparend betrieben werden kann.

Weitere Vorteile, Merkmale und Einzelheiten der Erfindung ergeben sich aus der nachfolgenden Beschreibung der anhand schematischer Zeichnungen erläuterten Ausführungsbeispiele.

Diese zeigen:
- Fig. 1:: eine erste perspektivische Darstellung eines Teils der erfindungsgemäßen Brüheinheit in einer ersten Ausführungsform;
- Fig. 2:: eine zweite perspektivische Darstellung eines Teils der erfindungsgemäßen Brüheinheit in einer ersten Ausführungsform;
- Fig. 3:: eine dritte perspektivische Darstellung eines Teils der erfindungsgemäßen Brüheinheit gemäß einer ersten Ausführungsform;
- Fig. 4:: ein Schnitt durch eine erfindungsgemäße Brüheinheit zur Darstellung eines zwangsgeöffneten Druck- oder Überdruckventils;
- Fig. 5:: eine Schnittzeichnung durch eine erfindungsgemäße Brüheinheit zur Darstellung des Spülvorgangs.

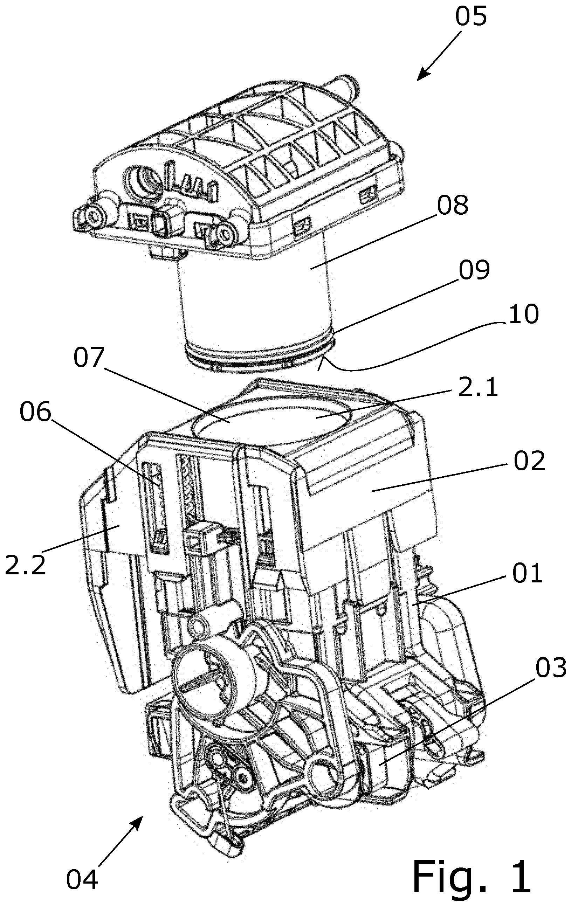

Fig. 1 zeigt einen Brühkammerträger 01, eine vom Brühkammerträger 01 beabstandete und gegenüber dem Brühkammerträger 1 bewegliche Brühkammer 02, einen mit dem Brühkammerträger 01 verbundene Kurbelwelleneinheit 04, einen Brühkopf 05 sowie seitlich an dem Brühkammerträger 01 angeordnete Gleitseine 03. Wie in der Fig. 1 ansatzweise bereits zu erkennen ist, ist die Brühkammer 02 über Verformungsmittel 06, insbesondere Wendelfedern, gefedert gegenüber dem Brühkammerträger 01 gelagert. Hierbei handelt es sich um eine vorteilhafte gleichermaßen nicht zwingende oder wesentliche Ausführungsform der Erfindung. Die Brühkammer 02 umfasst neben einem in der Fig. 1 nicht dargestellten Brühkammerboden 2.3 einen an dem Brühkammerboden 2.3 angrenzenden und mit diesem verbundenen, bevorzugt sogar mit diesem einteilig ausgebildeten Brühkammermantel 2.1 sowie ein Brühkammergehäuse 2.2. Am Übergang zwischen dem Brühkammermantel 2.1 zum Brühkammergehäuse 2.2 wird die Öffnung 07 der Brühkammer 02 ausgebildet. Je nach Position der Brühkammer 02 und des Brühkammerträgers 01 taucht der am Brühkopf 05 vorstehende Brühkolben 08 in die Öffnung 07 der Brühkammer 02 ein. Dabei wird mittels einer Dichtung 09 die Brühkammer 02 an dem Brühkammermantel 2.1 verschlossen und/oder abgedichtet. Die geschlossene oder verschlossene Brühkammer 02 wird dann durch den Brühkammerboden 2.3, einen jeweils unteren Abschnitt des Brühkammermantels 2.1 und eine Anpressoberfläche 10 des Brühkolbens 08 gebildet und/oder begrenzt.

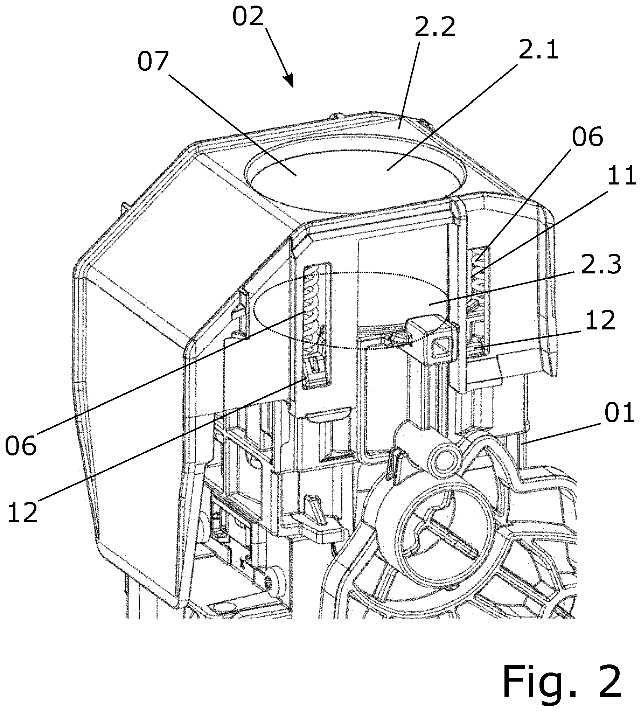

In der Darstellung der Fig. 2 ist durch die halbtransparente Darstellung der Brühkammer 02, des Brühkammergehäuses 2.2 sowie des Brühkammermantels 2.1 deutlicher die Anordnung und Ausgestaltung der Verformungsmittel 06 zu erkennen. Die Verformungsmittel 06 erstrecken sich zwischen dem Brühkammerträger 01 und der Brühkammer 02. Im Brühkammergehäuse 2.2 sind dabei Ausnehmungen 11 vorgesehen, die wiederum von Vorsprüngen 12 des Brühkammerträgers 01 durchsetzt werden und eine Führung der Brühkammer 02 gegenüber des Brühkammerträgers 01 ermöglichen, wenn durch eine mittelbare oder unmittelbare Krafteinwirkung auf die Brühkammer 02, insbesondere auf den Brühkammerboden 2.3 eine elastische Verformung der Verformungsmittel 06 bewirkt wird.

Die vorliegende Erfindung kann, wie oben bereits beschrieben, besonders vorteilhaft mit einer vollständig gefedert gelagerten Brühkammer 02 gemäß der Ausführungsform der Fig. 1 und 2 zusammenwirken. Es ist jedoch kein technisch wesentliches oder zwangsläufiges Merkmal der vorliegenden Erfindung. Vielmehr kann der Öffnungsmechanismus 26 des Brühkopfes 05 der vorliegenden Erfindung grundsätzlich auch mit einer anderen Lagerung der Brühkammer 02 und/oder des Brühkopfes 05 zum Einsatz kommen. Beispielsweise kann auch eine gattungsgemäß gefederte Lagerung des Brühkopfes als solches mit dem erfindungsgemäßen Öffnungsmechanismus zusammenwirken, wenn sichergestellt wird, dass für die Erreichung der Spülstellung der Brühkopf möglichst nicht einfedert oder zurückweicht und statt dessen nur das Druck- oder Überdruckventil eine Zwangsöffnung erfährt. Die Ausführungsform mit einer vollständig gefederten Brühkammer ist jedoch im Hinblick auf den Bauraum und andere Eigenschaften besonders vorteilhaft, wenn die vorliegende Erfindung mit einer Brüheinheit mit vollständig gefederter Brühkammer 02 kombiniert wird.

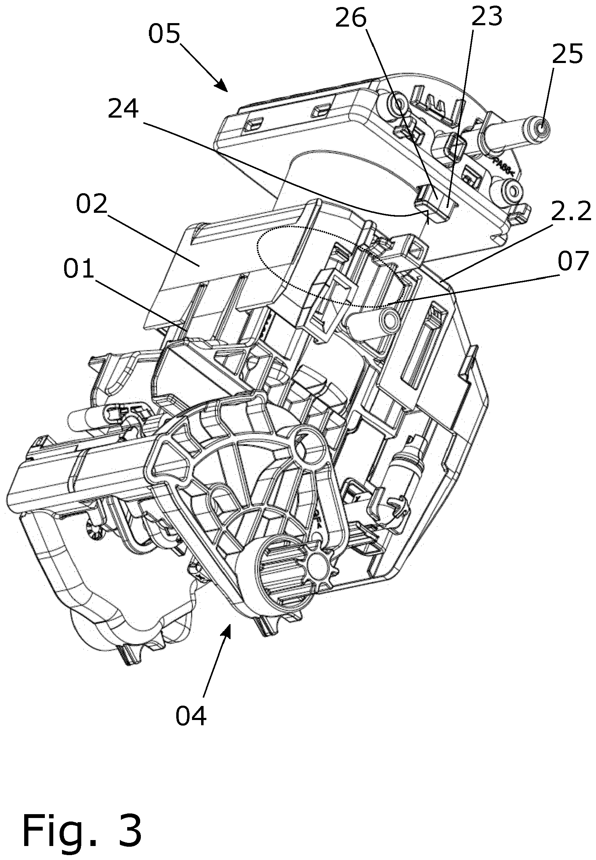

In der Darstellung der Fig. 3 sowie auch in den Fig. 1 und 2 sind Gehäuseteile der Brüheinheit, die im Stand der Technik hinlänglich bekannt sind, aus Gründen der Übersichtlichkeit nicht dargestellt. Die Gehäuseteile verbinden jedoch die Baugruppen und befestigen sie miteinander oder untereinander. Die Fig. 3 zeigt eine weitere perspektivische Ansicht von Teilen der Brüheinheit, wobei in der Darstellung der Fig. 3 der Brühkopf 05 mit seinem Brühkolben 08 bereits teilweise in die Öffnung 07 der Brühkammer 02 eingetaucht ist. Genauer ausgedrückt wurde der Brühkammerträger 01 sowie die Brühkammer 02 durch eine entsprechende Rotation oder Rotationsbewegung der Kurbelwelleneinheit 04 auf den ungefedert oder an sich unbewegbar in der Brüheinheit angeordneten Brühkopf 05 zubewegt, was dann dazu führt, dass der Brühkopf 05, insbesondere der Brühkolben 08, in die Öffnung 07 der Brühkammer 02 eintaucht. In der Darstellung der Fig. 3 ist ebenfalls durch die Wahl der Perspektive nunmehr ein Teil des Öffnungsmechanismus 26 eines Druck- oder Überdruckventils 19 des Brühkopfes 05 zu erkennen. Dabei handelt es sich um einen Flügel 23, der an einer Unterseite eine Auslösefläche 24 ausbildet. Die Auslösefläche 24 ist der Brühkammer 02 zugewandt und verläuft zumindest abschnittsweise parallel zu einem Teil des Brühkammergehäuses 2.2.

Wenn kein Getränkesubstrat oder nur Reste von Getränkesubstrat und damit Getränkesubstrat mit einer Menge, die eine Mindestmenge unterschreitet, in der Brühkammer 02 vorhanden ist und die Brühkammer 02 beispielsweise bei der Inbetriebnahme der Getränkezubereitungsvorrichtung oder nach einem Brühvorgang der Getränkezubereitungsvorrichtung gespült werden soll, wird durch eine weitere Rotation oder Rotationsbewegung der Kurbelwelleneinrichtung 04, die durch entsprechende Übersetzungmittels einer Führung in eine Linearbewegung der Baugruppe umfassend den Brühkammerträger 01 und die Brühkammer 02, übersetzt wird, dazu, dass beim Erreichen einer Endposition des Brühkammerträgers 01, die bevorzugt auch einer Endposition des Brühkammerträgers 01 beim Vorbereiten oder Durchführen eines Brühvorgangs entspricht, die Brühkammer 02, bevorzugt ein Teil des Brühkammergehäuses 2.2 mit der Auslösefläche 24 des Flügels 23 in Kontakt kommt und dadurch der nachfolgend noch im Detail beschriebene Öffnungsmechanismus 26 bis zum Erreichen der Endstellung des Brühkammerträgers 01 dazu führt, dass von der Auslösefläche 24 eine Kraft auf den Flügel 23 und damit auf den Öffnungsmechanismus 26 übertragen wird, der seinerseits wiederum dazu führt, dass ein in dem Brühkopf 05 angeordnetes Druck- oder Überdruckventil 19 in eine druckunabhängige Zwangsöffnungsstellung überführt wird.

Die Fig. 3 zeigt weiterhin eine Auslassöffnung 25 des Brühkopfes 05. Die Auslassöffnung 25 kann während eines Brühvorgangs für den Auslass des zubereiteten Getränks verwendet werden. Während des Spülvorgangs kann die Auslassöffnung 25 auch als Auslassöffnung 25 für Spülfluid genutzt werden. In diesem Fall kann entweder vorgesehen sein, dass das Spülfluid durch die Öffnung oder Ausgabeeinrichtung ausgegeben wird, durch die auch das Getränk die Getränkezubereitungsvorrichtung verlässt oder abgegeben wird. Alternativ kann durch ein nachgeordnetes Ventil, also ein der Auslassöffnung 25 nachgeordnetes Schaltventil, auch bewerkstelligt werden, dass das Spülfluid über einen anderen Fluidpfad abgeleitet wird und beispielsweise direkt einer Auffangeinrichtung, beispielsweise einer Auffangschale zugeführt wird.

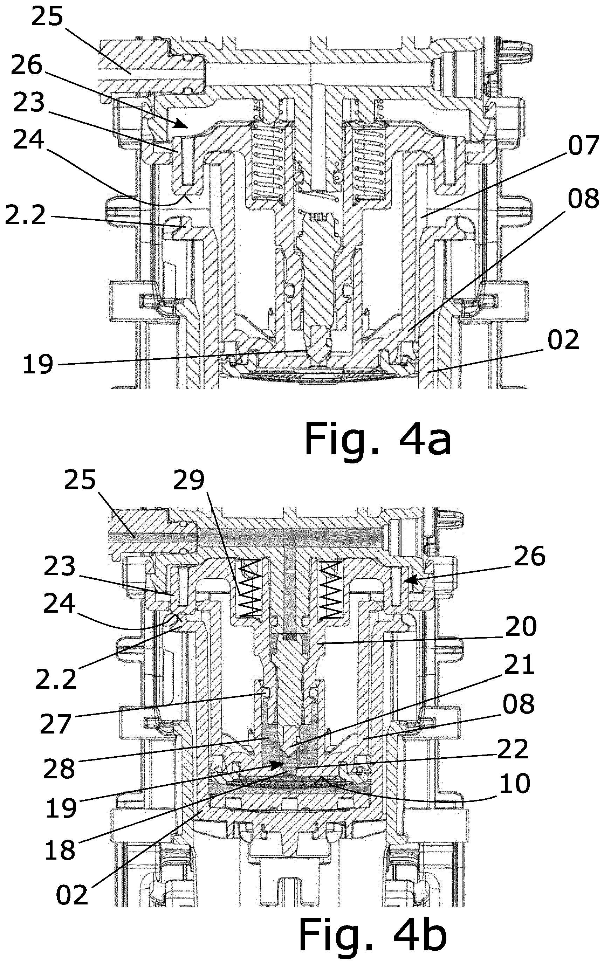

Die Fig. 4a zeigt einen Schnitt durch eine erfindungsgemäße Brüheinheit zum Zeitpunkt vor der Durchführung des Spülvorgangs und damit auch vor der Erreichung der Spülstellung. Der Brühkolben 08, hat durch eine Verstellung der Brühkammer 02 auf den Brühkopf 05 hin bereits die Öffnung 07 verschlossen und abgedichtet. Es besteht jedoch noch ein deutlicher Abstand zwischen der Auslösefläche 24 des Flügels 23 und dem oberen Rand des Brühkammergehäuses 2.2. Demnach findet noch keine Zwangsöffnung des Druck- oder Überdruckventils 19 durch den Öffnungsmechanismus 26 statt, was sich jedoch bei der Erreichung der Spülstellung ändert, die in Fig.4b dargestellt ist.

Fig. 4b zeigt einen Schnitt durch eine erfindungsgemäße Brüheinheit zum Zeitpunkt der Durchführung eines Spülvorganges. Anhand der Schnittzeichnung kann insbesondere der Öffnungsmechanismus 26 beschrieben und nachvollzogen werden. In der Anpressoberfläche 10 des Brühkolbens 08 befindet sich eine Fluidauslassöffnung 18. Die Fluidauslassöffnung 18 bildet auf der Rückseite oder Innenseite des Brühkopfes 05 einen Ventilsitz 22 aus. An dem Ventilsitz 22 kann ein Ventilkörper 21 dichtend zur Anlage kommen. Der Ventilkörper 21 wird wiederum von einem Ventilträger 20 gehalten und geführt. Der Ventilträger 20 verfügt über ein Dichtelement 27, bevorzugt eine Ringdichtung, um eine Innenausnehmung oder ein Innenvolumen 28 des Dichtkolbens 08 abzudichten. Eine Ausnehmung, ein Durchbruch oder eine Öffnung im Ventilträger 20, die nicht im Detail dargestellt ist, sorgt dafür, dass das Innenvolumen 28 mit einem zentrisch innerhalb des Ventilträgers 20 geführten Auslaufkanal kommunizieren kann, also fluiddurchlässig ist, sodass bei einem vom Ventilsitz 22 abgehobenen Ventilkörper 21 Fluid aus der Brühkammer 02 über die Fluidauslassöffnung 18 in das Innenvolumen 28 und von dort aus über das Innere des Ventilträges 20 bis zur Auslassöffnung 25 gelangen kann.

In der Darstellung der Fig. 4b ist zu erkennen, dass der Ventilträger 20 durch Federmittel 29 federgelagert oder vorgespannt ist. Die Gesamtrichtgröße der Federmittel 29 beträgt vorteilhafterweise zwischen 2,0 N/mm und 3,0 N/mm. Bei einem Brühvorgang, sorgt eine Mindestmenge an Getränkesubstrat, die in der Fig. 4b, die den Spülvorgang veranschaulicht, nicht vorhandene ist, dafür, dass die Auslösefläche 24 des Öffnungsmechanismus 26 nicht mit der Brühkammer 02, insbesondere dem Brühkammergehäuse 2.2 in Kontakt kommt, sondern ein Mindestabstand verbleibt, der auch dadurch gewährleistet wird, dass bei einer Kontaktierung der Anpressoberfläche 10 mit dem entsprechenden Getränkesubstrat eine Verformung der Verformungsmittel 06 eine zusätzliche Bewegung der Brühkammer 02 in Richtung auf den Brühkopf 05 kompensiert. Damit behält das Druck- oder Überdruckventil 19 seine ursprüngliche Funktion und öffnet dementsprechend nur wenn der Druck oder Innendruck in der geschlossenen oder verschlossenen Brühkammer 02 einen Grenzdruck überschreitet, der so groß ist, dass gegen die Vorspannung der Federmittel 29 der Ventilkörper 21 vom Ventilsitz 22 abgehoben wird und damit das Brühfluid oder das Getränk über das Innenvolumen 28 oder das Innere des Ventilträgers 20 abfließen kann.

Wenn jedoch, wie beabsichtigt, für einen Spülvorgang nur geringste Restmengen oder überhaupt kein Getränkesubstrat in der Brühkammer 02 angeordnet ist, findet während der Verstellung des Brühkammerträgers 01 zur Spülposition oder Endposition des Brühkammerträgers 01 keine Verformung der Verformungsmittel 06 statt. Stattdessen tritt der Fall ein, der in der Fig. 4b dargestellt ist. In diesem taucht der Brühkopf 05, insbesondere der Brühkolben 08 soweit in die Brühkammer 02 ein, bis zunächst die Auslöseflächen 24 des Öffnungsmechanismus 26 die Brühkammer 02, insbesondere das Brühkammergehäuse 2.2 kontaktieren oder berühren.

Bei einer weiteren, Verstellung der Brühkammer 02 und/oder des Brühkammerträgers 01 in Richtung auf den Brühkopf 05 zu wird dann von der Brühkammer 02, insbesondere vom Brühkammergehäuse 2.2 eine Kraft über die Auslöseflächen 24 auf den Öffnungsmechanismus 26 des Druck- oder Überdruckventils 19 ausgeübt, sodass entgegen der Vorspannung oder Federlagerung mittels der Federmittel 29 unabhängig vom Innendruck in der Brühkammer 02 der Ventilkörper 21 vom Ventilsitz 22 abgehoben wird und damit die Fluidkommunikation oder der Fluidfluss von der Brühkammer 02 über das Innenvolumen 28 und das Innere des Ventilträgers 20 bis zum Fluidauslass 25 ermöglicht oder freigegeben wird. Dieser Vorgang erfolgt, während sich die Brüheinheit von einem Zustand der Darstellung der Fig. 4a zu einem Zustand der Darstellung der Fig. 4b bewegt, indem die Brühkammer 02 weiter linear verschoben wird.

Dabei ist besonders bevorzugt die Gesamtrichtgröße des Druck- oder Überdruckventils 19, bevorzugt einschließlich des mechanischen Öffnungsmechanismus und gegebenenfalls Widerständen oder Haftwiderständen zwischen Ventilkörper 21 und Ventilsitz 22 geringer, bevorzugt weniger als halb so groß wie die Gesamtrichtgröße der elastischen Verformungsmittel 6 zwischen Brühkammer 02 und Brühkammerträger 01. Dadurch werden verschiedene vorteilhafte Wirkungen erreicht. Einerseits wird sichergestellt, dass die elastischen Verformungsmittel 06 bei der Zwangsöffnung des Druck- oder Überdruckventils 19 über den Öffnungsmechanismus 26 nicht komprimiert werden, was wiederum zu dem Resultat führt, dass die Brühkammer 02, insbesondere die verschlossene Brühkammer 02 nicht vergrö-ßert wird, was ansonsten durch eine Kompression oder Verformung der elastischen Verformungsmittel 06 der Fall wäre. Diese Beibehaltung einer kleinen Brühkammer 02 oder eines minimalen Volumens der Brühkammer 02 hat den Vorteil, dass die Menge oder das Volumen an Spülfluid weiter verringert werden kann. Insgesamt ergibt sich in dieser Ausführungsform also eine weitestgehende Minimierung des Volumens der geschlossenen oder verschlossenen Brühkammer 02 vor und während der Durchführung des Spülvorgangs.

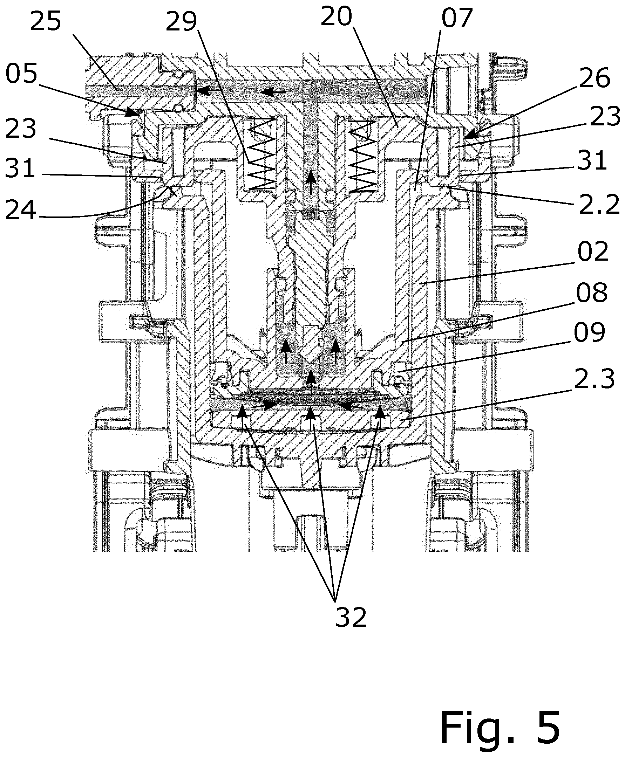

Die Fig. 5 zeigt beispielhaft anhand von Pfeilsymbolen den Fluidfluss während der Spülung der Brühkammer 02. Das Spülfluid kann durch eine oder mehrere Fluideinlassöffnungen 32, die beispielweise im Brühkammerboden 2.3 angeordnet sind, in die geschlossene oder verschlossene Brühkammer 02 eintreten. Dort kann das Spülfluid Reste eines Brühvorgangs oder sonstige Verunreinigungen aufnehmen und abtransportieren. Die Dichtung 09 des Brühkolbens 08 kann auch zur mechanischen Vorreinigung des oberen Bereichs der Brühkammer 02 oder des Brühkammermantels verwendet werden, sodass beim Eintauchen des Brühkolbens 08 in die Öffnung 07 der Brühkammer 02 die oberen Teile des Brühkammermantels 2.1 durch die daran entlanggleitende Dichtung 09 mechanisch von Verunreinigungen befreit werden, die dann zusammen mit dem Brühkolben 08 nach unten in die geschlossene oder verschlossene Brühkammer 02 transportiert werden und im Rahmen des Spülvorgangs ebenfalls entfernt werden können. Das Spülfluid kann von der geschlossenen oder verschlossenen Brühkammer 02 in das Innenvolumen 28 des Brühkolbens 08 gelangen, wo eine entsprechende Ausnehmung, Öffnung oder ein Durchbruch im Ventilträger 20 den Abfluss des Spülfluids über einen innenliegenden Fluidkanal bis hin zur Auslassöffnung 25 ermöglicht. Besonders ist dabei, dass das Druck- oder Überdruckventil 19 permanent geöffnet ist und gerade nicht erst ab Erreichen eines Grenzdrucks oder gewissen Überdrucks in der geschlossenen Brühkammer 02 öffnet.

Dazu dient der Öffnungsmechanismus 26, wie anhand der Fig. 5 nochmals nachvollzogen werden kann. Bevorzugt ist der Öffnungsmechanismus 26 einteilig mit dem sonstigen Ventilträger 20 ausgebildet. Insbesondere sind an einem radial äußeren Ende des Ventilträgers 20 an gegenüberliegenden Seiten zwei Flügel 23 oder Arme ausgebildet, die bevorzugt aus einer der Brühkammer 02 zugewandten Öffnung 31 des Brühkopfes 05, und zwar radial außerhalb des Brühkolbens 08, herausragen. Damit wird ermöglicht, dass die Brühkammer 02, insbesondere das Brühkammergehäuse 2.2 bei einer entsprechenden Kontaktierung der Auslösefläche 24 und einer entsprechenden Bewegung auf den Brühkopf 05 zu über die Flügel 23 oder Arme des Ventilträgers 20 den Ventilträger 20 entgegen der Vorspannung der Federmittel 29 bewegt und damit den Ventilkörper 21 vom Ventilsitz 22 abhebt und das Druck- oder Überdruckventil 19 damit in eine Zwangsöffnungsstellung überführt.

### Bezugszeichen

- 01: Brühkammerträger
- 02: Brühkammer
- 2.1: Brühkammermantel
- 2.2: Brühkammergehäuse
- 2.3: Brühkammerboden
- 03: Gleitsteine
- 04: Kurbelwelleneinheit
- 05: Brühkopf
- 06: Verformungsmittel
- 07: Öffnung
- 08: Brühkolben
- 09: Dichtung
- 10: Anpressoberfläche
- 11: Ausnehmungen
- 12: Vorsprünge
- 18: Fluidauslassöffnung
- 19: Druck- oder Überdruckventil
- 20: Ventilträger
- 21: Ventilkörper
- 22: Ventilsitz
- 23: Flügel
- 24: Auslösefläche
- 25: Auslassöffnung
- 26: Öffnungsmechanismus
- 27: Dichtelement
- 28: Innenvolumen
- 29: Federmittel
- 31: Öffnung
- 32: Fluideinlassöffnun

## Patentansprüche

1. Brüheinheit für eine Getränkezubereitungsvorrichtung, insbesondere eine Kaffee- und/oder Espressomaschine, mit einer mittels Antriebs- oder Verstelleinrichtung zwischen unterschiedlichen Betriebsstellungen verstellbaren Brühkammer (02), die zur Aufnahme eines Getränkesubstrats, insbesondere gemahlenem Kaffeepulver, über eine Öffnung (07) der Brühkammer (02) eingerichtet ist sowie mit einem Brühkopf (05), der zumindest in einer Brühstellung und einer Spülstellung der Brühkammer (02) in die Öffnung (07) der Brühkammer (02), bevorzugt mit einem vorstehenden Brühkolben (08), zumindest teilweise eingeführt angeordnet ist und eine Fluidauslassöffnung (18), insbesondere an einer Stirnseite des Brühkolbens (08), aufweist, welche mit einem Druck- oder Überdruckventil (19) zusammenwirkend vorgesehen ist, welches beim Erreichen eines Grenzdrucks innerhalb einer verschlossenen Brühkammer (02) öffnet und den Abfluss von Fluid aus der Brühkammer (02) ermöglicht,
**dadurch gekennzeichnet,**
**dass** das Druck- oder Überdruckventil (19) mit einem mechanischen Öffnungsmechanismus (26) zur Zwangsöffnung des Druck- oder Überdruckventils (19) unabhängig vom Druck in der Brühkammer (02) zusammenwirkend ausgebildet ist, wobei die Brühkammer (02) derart ausgebildet und angeordnet ist, dass beim Unterschreiten einer Mindestmenge an Getränkesubstrat in der Brühkammer (02) beim Verstellen der Brühkammer (02) in Richtung der Spülstellung vor dem Erreichen der Spülstellung eine Auslösefläche (24) des Öffnungsmechanismus (26) mit der Brühkammer (02) in Kontakt kommt und beim weiteren Verstellen der Brühkammer (02) in Richtung der Spülstellung eine Kraftübertragung von der Brühkammer (02) über die Auslösefläche (24) auf den Öffnungsmechanismus (26) bewirkt, so dass beim Erreichen der Spülstellung das Druck-oder Überdruckventil (19) in eine druckunabhängige Zwangsöffnungsstellung überführt wurde.

2. Brüheinheit nach Anspruch 1,
**dadurch gekennzeichnet,**
**dass** der Brühkopf (05) starr, bevorzugt ungefedert, ausgebildet und in der Brüheinheit angeordnet ist.

3. Brüheinheit nach Anspruch 1 oder 2,
**dadurch gekennzeichnet,**
**dass** das Druck- oder Überdruckventil (19) einen, bevorzugt im Brühkopf (05), federgelagerten Ventilträger (20) aufweist, der einen Ventilkörper (21) in Richtung auf einen, bevorzugt durch in eine innere Stirnfläche eines Brühkolbens (08) gebildeten, Ventilsitz (22) kraftbeaufschlagt.

4. Brüheinheit nach einem der Ansprüche 1 bis 3,
**dadurch gekennzeichnet,**
**dass** der Öffnungsmechanismus (26) kraftschlüssig mit dem Ventilträger (20) verbunden und bevorzugt einstückig mit dem Ventilträger (20) ausgebildet ist.

5. Brüheinheit nach Anspruch 4,
**dadurch gekennzeichnet,**
**dass** der Öffnungsmechanismus (26) durch wenigstens einen Flügel (23) oder Arm des Ventilträgers (20) gebildet wird, der bevorzugt aus einer der Brühkammer (02) zugewandten Öffnung (07) des Brühkopfes (05), besonders bevorzugt radial außerhalb des Brühkolbens (08), herausragt.

6. Brüheinheit nach einem der Ansprüche 1 bis 5,
**dadurch gekennzeichnet**,
die Brühkammer (02) über elastische Verformungsmittel (06), bevorzugt mehrere Federn, insbesondere Wendelfedern, mit einem Brühkammerträger (01) verbunden und von diesem beweglich beabstandet ist.

7. Brüheinheit nach einem der Ansprüche 1 bis 6,
**dadurch gekennzeichnet,**
**dass** der Ventilträger (20) durch Federmittel (29) federgelagert wird, wobei bevorzugt deren Gesamtrichtgröße zwischen 2,0 N/mm und 3,0 N/mm beträgt.

8. Brüheinheit nach einem der Ansprüche 6 oder 7,
**dadurch gekennzeichnet,**
**dass** eine Gesamtrichtgröße des Druck-oder Überdruckventils (19), bevorzugt einschließlich des mechanischen Öffnungsmechanismus (26), geringer, bevorzugt weniger als halb so groß, ist, wie die Gesamtrichtgröße der elastischen Verformungsmittel (06) zwischen Brühkammer (02) und Brühkammerträger (01).

9. Brüheinheit nach einem der Ansprüche 6 bis 8,
**dadurch gekennzeichnet,**
**dass** das elastische Verformungsmittel (06) eine Gesamtrichtgröße von 6,0 N/mm bis 8,0 N/mm, bevorzugt von 6,5 N/mm bis 7,5 N/mm, aufweist.

10. Brüheinheit nach einem der Ansprüche 1 bis 9,
**dadurch gekennzeichnet**,
der Brühkammerträger (01) mit einer Kurbelwelleneinheit (04) verbunden ist, wobei die Verbindung derart ausgestaltet ist, dass die Kurbelwelleneinheit (04) je nach Rotation oder Rotationszustand eine Kippbewegung oder Linearverstellung des Brühkammerträgers (01) und der Brühkammer (02) bewirkt.

11. Brüheinheit nach Anspruch 10,
**dadurch gekennzeichnet,**
**dass** die Kurbelwelleneinheit (04) und/oder der Brühkammerträger (01) zum Erreichen der Spülstellung und zum Erreichen der Brühstellung die gleiche Position oder die gleichen Positionen einnehmen.

12. Getränkezubereitungsvorrichtung, insbesondere eine Kaffee- und/oder Espressomaschine, **gekennzeichnet durch** eine Brüheinheit nach einem der Ansprüche 1 bis 11.

13. Verfahren zum Betrieb einer Brüheinheit für eine Getränkezubereitungsvorrichtung nach einem der Ansprüche 1 bis 11, insbesondere eine Kaffee- und/oder Espressomaschine, insbesondere Verfahren zum Durchführen eines Spülvorgangs, umfassend die Verfahrensschritte:
- Verstellen einer Brühkammer (02), die zur Aufnahme eines Getränkesubstrats, insbesondere gemahlenem Kaffeepulver, über eine Öffnung (07) der Brühkammer (02) eingerichtet ist, aus einer Entladestellung oder Ruhestellung in eine Spülstellung mittels einer Antriebs- oder Verstelleinrichtung
- Verschließen der Brühkammer (02), insbesondere der Öffnung (07) der Brühkammer (02) mittels eines Brühkopfes (05), der beim Verstellen der Brühkammer (02) in die Spülstellung in die Öffnung (07) der Brühkammer (02), bevorzugt mit einem vorstehenden Brühkolben (08), zumindest teilweise eingeführt wird,
- Spülen der verschlossenen Brühkammer (02) mit einem Spülfluid, bevorzugt Wasser, wobei ein im Brühkopf (05), insbesondere an einer Stirnseite des Brühkolbens (08), angeordnete Fluidauslassöffnung (18), welche mit einem Druck- oder Überdruckventil (19) zusammenwirkend vorgesehen ist, welches beim Erreichen eines Grenzdrucks innerhalb einer verschlossenen Brühkammer (02) öffnet und den Abfluss von Fluid aus der Brühkammer (02) ermöglicht, geöffnet wird,
**dadurch gekennzeichnet,**
**dass** das Druck- oder Überdruckventil (19) mit einem mechanischen Öffnungsmechanismus (26) zur Zwangsöffnung des Druck- oder Überdruckventils (19) unabhängig vom Druck in der Brühkammer (02) zusammenwirkend ausgebildet ist, wobei die Brühkammer (02) beim Unterschreiten einer Mindestmenge an Getränkesubstrat in der Brühkammer (02) beim Verstellen der Brühkammer (02) in Richtung der Spülstellung vor dem Erreichen der Spülstellung an einer Auslösefläche (24) des Öffnungsmechanismus (26) zur Anlage kommt und beim weiteren Verstellen der Brühkammer (02) in Richtung der Spülstellung eine Kraftübertragung von der Brühkammer (02) über die Auslösefläche (24) auf den Öffnungsmechanismus (26) bewirkt, so dass beim Erreichen der Spülstellung der Brühkammer (02) das Druck-oder Überdruckventil (19) in eine druckunabhängige Zwangsöffnungsstellung überführt wird.

14. Verfahren nach Anspruch 13,
**dadurch gekennzeichnet,**
**dass** der Brühkopf (05) beim Überführen der Brühkammer (02) in die Spülstellung unbewegt in einer fixen Position gegenüber der Brüheinheit verharrt.

15. Verfahren nach Anspruch 13 oder 14,
**dadurch gekennzeichnet,**
**dass** beim Überführen der Brühkammer (02) in die Spülstellung der Öffnungsmechanismus (26) auf einen, bevorzugt im Brühkopf (05) angeordneten, mit Federmitteln (29) vorgespannten Ventilträger (20) des Druck- oder Überdruckventils (19) einwirkt und insbesondere dabei entgegen einer Vorspannung der Federmittel (29) den Ventilträger (20) bewegt und dadurch einen mit dem Ventilträger (20) verbundenen Ventilkörper (21) von einem, bevorzugt durch in einer Stirnfläche eines Brühkolbens (08) gebildeten Ventilsitz (22) abhebt.

16. Verfahren nach einem der Ansprüche 13 bis 15,
**dadurch gekennzeichnet,**
**dass** die Kraftübertragung des Öffnungsmechanismus (26) auf den Ventilträger (20) unmittelbar, insbesondere ohne Umlenkung, zu einer Verschiebung des Ventilträgers (20) gegen die Vorspannung der Federmittel (29) führt.

17. Verfahren nach einem der Ansprüche 13 bis 16,
**dadurch gekennzeichnet,**
**dass** die Kurbelwelleneinheit (04) und/oder der Brühkammerträger (01) zum Erreichen der Spülstellung die und zum Erreichen der Brühstellung die gleiche Position oder die gleichen Positionen einnehmen.

## Claims

1. A brewing unit for a beverage preparation device, in particular a coffee and/or espresso machine, said brewing unit comprising a brewing chamber (02) displaceable between different operating positions by means of a driving or displacing mechanism and configured to receive a beverage substrate, in particular ground coffee powder, via an opening (07) of the brewing chamber (02) and comprising a brew head (05) which, at least in a brewing position and a flushing position of the brewing chamber (02), is disposed in an at least partially inserted manner in the opening (07) of the brewing chamber (02), preferably with a protruding brewing piston (08), and which has a fluid outlet opening (18), in particular at a front side of the brewing piston (08), said fluid outlet opening (18) being provided so as to interact with a pressure valve or pressure relief valve (19) which opens when a limit pressure within a closed brewing chamber (02) is reached and allows fluid to flow out of the brewing chamber (02),
**characterized in that**
the pressure valve or pressure relief valve (19) is designed so as to interact with a mechanical opening mechanism (26) for the positive opening operation of the pressure valve or pressure relief valve (19) independently of the pressure in the brewing chamber (02), the brewing chamber (02) being designed and disposed in such a manner that, when the quantity of a beverage substrate in the brewing chamber (02) falls below a minimum quantity, a triggering surface (24) of the opening mechanism (26) comes into contact with the brewing chamber (02) when the brewing chamber (02) is displaced in the direction of the flushing position before the flushing position is reached and effects a force transmission from the brewing chamber (02) to the opening mechanism (26) via the triggering surface (24) when the brewing chamber (02) is further displaced in the direction of the flushing position such that the pressure valve or pressure relief valve (19) has been transferred into a positive opening operation position independent of pressure when the flushing position is reached.

2. The brewing unit according to claim 1,
**characterized in that**
the brew head (05) is rigid, preferably unsprung, and disposed in the brewing unit.

3. The brewing unit according to claim 1 or 2,
**characterized in that**
the pressure valve or pressure relief valve (19) has a valve support (20) which is spring-mounted, preferably in the brew head (05), and which applies force to a valve body (21) in the direction of a valve seat (22) which is preferably formed by an inner front face of a brewing piston (08).

4. The brewing unit according to any one of claims 1 to 3,
**characterized in that**
the opening mechanism (26) is connected to the valve support (20) in a non-positive manner and preferably integrally formed with the valve support (20).

5. The brewing unit according to claim 4,
**characterized in that**
the opening mechanism (26) is realized by at least one wing (23) or arm of the valve support (20) which protrudes preferably from an opening (07) of the brew head (05) facing toward the brewing chamber (02), especially preferably radially outside the brewing piston (08).

6. The brewing unit according to any one of claims 1 to 5,
**characterized in that**
the brewing chamber (02) is connected to a brewing chamber support (01) via elastic deformation elements (06), preferably several springs, in particular spiral coiled springs, and movably spaced apart from said brewing chamber support (01).

7. The brewing unit according to any one of claims 1 to 6,
**characterized in that**
the valve support (20) is spring-mounted by means of spring elements (29), preferably their total spring rate being between 2.0 N/mm and 3.0 N/mm.

8. The brewing unit according to claim 6 or 7,
**characterized in that**
a total spring rate of the pressure valve or pressure relief valve (19), preferably including the mechanical opening mechanism (26), is smaller than, preferably less than half as large as, the total spring rate of the elastic deformation elements (06) between the brewing chamber (02) and the brewing chamber support (01).

9. The brewing unit according to any one of claims 6 to 8,
**characterized in that**
the elastic deformation element (06) has a total spring rate of 6.0 N/mm to 8.0 N/mm, preferably of 6.5 N/mm to 7.5 N/mm.

10. The brewing unit according to any one of claims 1 to 9,
**characterized in that**
the brewing chamber support (01) is connected to a crankshaft unit (04), the connection being realized in such a manner that the crankshaft unit (04) causes a tilting movement or a linear displacement of the brewing chamber support (01) and the brewing chamber (02) depending on the rotation or the rotational state.

11. The brewing unit according to claim 10,
**characterized in that**
the crankshaft unit (04) and/or the brewing chamber support (01) take the same position or the same positions to reach the flushing position and to reach the brewing position.

12. A beverage preparation device, in particular a coffee machine and/or espresso machine, **characterized by** a brewing unit according to any one of claims 1 to 11.

13. A method for operating a brewing unit for a beverage preparation device according to any one of claims 1 to 11, in particular a coffee machine and/or espresso machine, in particular a method for performing a flushing process, said method comprising the following method steps:
- displacing a brewing chamber (02), which is configured to receive a beverage substrate, in particular ground coffee powder, via an opening (07) of the brewing chamber (02), from a discharge position or a rest position into a flushing position by means of a driving or displacing mechanism
- closing the brewing chamber (02), in particular the opening (07) of the brewing chamber (02), by means of a brew head (05) which is at least partially inserted into the opening (07) of the brewing chamber (02), preferably with a protruding brewing piston (08), when the brewing chamber (02) is displaced into the flushing position,
- flushing the closed brewing chamber (02) with a flushing fluid, preferably water, a fluid outlet opening (18) which is disposed in the brew head (05), in particular at a front side of the brewing piston (08), and which is provided so as to interact with a pressure valve or pressure relief valve (19) being opened, said pressure valve or pressure relief valve (19) opening when a limit pressure within a closed brewing chamber (02) is reached and allowing fluid to flow out of the brewing chamber (02),
**characterized in that**
the pressure valve or pressure relief valve (19) is designed so as to interact with a mechanical opening mechanism (26) for a positive opening operation of the pressure valve or pressure relief valve (19) independently of the pressure in the brewing chamber (02), the brewing chamber (02), when the quantity of a beverage substrate in the brewing chamber (02) falls below a minimum quantity, coming into contact with a triggering surface (24) of the opening mechanism (26) when the brewing chamber (02) is displaced in the direction of the flushing position before the flushing position is reached and effecting a force transmission from the brewing chamber (02) to the opening mechanism (26) via the triggering surface (24) when the brewing chamber (02) is further displaced in the direction of the flushing position such that the pressure valve or pressure relief valve (19) is transferred into a positive opening operation position independent of pressure when the flushing position of the brewing chamber (02) is reached.

14. The method according to claim 13,
**characterized in that**
the brew head (05) remains unmoved in a fixed position relative to the brewing unit when the brewing chamber (02) is transferred into the flushing position.

15. The method according to claim 13 or 14,
**characterized in that**
when the brewing chamber (02) is transferred into the flushing position, the opening mechanism (26) acts on a valve support (20) of the pressure valve or pressure relief valve (19), which is preloaded with spring elements (29) and is preferably disposed in the brew head (05), and, in particular in this process, moves the valve support (20) against a preload of the spring elements (29) and, thereby, lifts a valve body (21) connected to the valve support (20) off a valve seat (22) which is preferably formed by an inner front face of a brewing piston (08).

16. The method according to any one of claims 13 to 15,
**characterized in that**
the force transmission of the opening mechanism (26) to the valve support (20) leads directly, in particular without deflection, to a displacement of the valve support (20) against the preload of the spring elements (29).

17. The method according to any one of claims 13 to 16,
**characterized in that**
the crankshaft unit (04) and/or the brewing chamber support (01) take the same position or the same positions to reach the flushing position and to reach the brewing position.

## Revendications

1. Unité d'infusion pour un dispositif de préparation de boissons, notamment une machine à café et/ou à expresso, ladite unité d'infusion comprenant une chambre d'infusion (02) déplaçable entre différentes positions de fonctionnement au moyen d'un moyen d'entraînement ou de déplacement et configurée pour recevoir un substrat de boisson, notamment une poudre de café moulue, via une ouverture (07) de la chambre d'infusion (02) et comprenant une tête d'infusion (05) qui, au moins dans une position d'infusion et une position de rinçage de la chambre d'infusion (02), est disposée de manière au moins partiellement insérée dans l'ouverture (07) de la chambre d'infusion (02), de préférence avec un piston d'infusion (08) saillant, et qui a une ouverture (18) de sortie de fluide, notamment sur un côté frontal du piston d'infusion (08), ladite ouverture (18) de sortie de fluide étant prévue de manière à interagir avec une soupape (19) de pression ou de surpression qui s'ouvre lorsqu'une pression limite est atteinte à l'intérieur d'une chambre d'infusion (02) fermée et permet au fluide de s'écouler de la chambre d'infusion (02),
**caractérisée en ce que**
la soupape (19) de pression ou de surpression est conçue de manière à interagir avec un mécanisme d'ouverture (26) mécanique pour le manoeuvre positive d'ouverture de la soupape (19) de pression ou de surpression indépendamment de la pression dans la chambre d'infusion (02), la chambre d'infusion (02) étant conçue et disposée de manière que, lorsque la quantité d'un substrat de boisson est inférieure à une quantité minimale, une surface de déclenchement (24) du mécanisme d'ouverture (26) vient en contact avec la chambre d'infusion (02) lorsque la chambre d'infusion (02) est déplacée dans la direction de la position de rinçage avant que la position de rinçage soit atteinte et effectue une transmission de force de la chambre d'infusion (02) sur le mécanisme d'ouverture (26) via la surface de déclenchement (24) lorsque la chambre d'infusion (02) est déplacée davantage dans la direction de la position de rinçage de manière que la soupape (19) de pression ou de surpression a été transférée dans une position de manoeuvre positive d'ouverture indépendante d'une pression lorsque la position de rinçage est atteinte.

2. Unité d'infusion selon la revendication 1,
**caractérisée en ce que**
la tête d'infusion (05) est rigide, de préférence non suspendue, et disposée dans l'unité d'infusion.

3. Unité d'infusion selon la revendication 1 ou 2,
**caractérisée en ce que**
la soupape (19) de pression ou de surpression a un support de soupape (20) qui est monté sur ressorts, de préférence dans la tête d'infusion (05), et qui applique une force sur un corps de soupape (21) dans la direction d'un siège de soupape (22) qui est, de préférence, formé par une surface frontale intérieure d'un piston d'infusion (08).

4. Unité d'infusion selon l'une quelconque des revendications 1 à 3,
**caractérisée en ce que**
le mécanisme d'ouverture (26) est relié au support de soupape (20) de manière à être solidaire et, de préférence, est formé d'un seul tenant avec le support de soupape (20).

5. Unité d'infusion selon la revendication 4,
**caractérisée en ce que**
le mécanisme d'ouverture (26) est réalisé par au moins une aile (23) ou un bras du support de soupape (20) qui, de préférence, fait saillie d'une ouverture (07) de la tête d'infusion (05) orientée vers la chambre d'infusion (02), de préférence particulière radialement à l'extérieur du piston d'infusion (08).

6. Unité d'infusion selon l'une quelconque des revendications 1 à 5,
**caractérisée en ce que**
la chambre d'infusion (02) est reliée à un support (01) de la chambre d'infusion via des moyens de déformation (06), de préférence plusieurs ressorts, notamment ressorts en spirale, et est espacée de manière mobile dudit support (01) de la chambre d'infusion.

7. Unité d'infusion selon l'une quelconque des revendications 1 à 6,
**caractérisée en ce que**
le support de soupape (20) est monté sur ressorts par des moyens de ressort (29), de préférence, leur facteur de rappel total étant entre 2,0 N/mm et 3,0 N/mm.

8. Unité d'infusion selon la revendication 6 ou 7,
**caractérisée en ce**
**qu'**un facteur de rappel total de la soupape (19) de pression ou de surpression, de préférence incluant le mécanisme d'ouverture (26) mécanique, est inférieur au, de préférence inférieur à la moitié du, facteur de rappel total des moyens de déformation (06) entre la chambre d'infusion (02) et le support (01) de la chambre d'infusion.

9. Unité d'infusion selon l'une quelconque des revendications 6 à 8,
**caractérisée en ce que**
le moyen de déformation (06) a un facteur de rappel total de 6,0 N/mm à 8,0 N/mm, de préférence de 6,5 N/mm à 7,5 N/mm.

10. Unité d'infusion selon l'une quelconque des revendications 1 à 9,
**caractérisée en ce que**
le support (01) de la chambre d'infusion est relié à une unité de vilebrequin (04), la liaison étant réalisée de manière que l'unité de vilebrequin (04) provoque un mouvement de basculement ou un déplacement linéaire du support (01) de la chambre d'infusion et de la chambre d'infusion (02) en fonction d'une rotation ou un état de rotation.

11. Unité d'infusion selon la revendication 10,
**caractérisée en ce que**
l'unité de vilebrequin (04) et/ou le support (01) de la chambre d'infusion prennent la même position ou les mêmes positions pour atteindre la position de rinçage et pour atteindre la position d'infusion.

12. Dispositif de préparation de boissons, notamment une machine à café et/ou à expresso, **caractérisé par** une unité d'infusion selon l'une quelconque des revendications 1 à 11.

13. Procédé pour le fonctionnement d'une unité d'infusion pour un dispositif de préparation de boissons selon l'une quelconque des revendications 1 à 11, notamment une machine à café et/ou à expresso, notamment un procédé pour effectuer un processus de rinçage, ledit procédé comprenant les étapes de procédé suivantes :
- déplacer une chambre d'infusion (02) configurée pour recevoir un substrat de boisson, notamment une poudre de café moulue, via une ouverture (07) de la chambre d'infusion (02) à partir d'une position de décharge ou d'une position de repos dans une position de rinçage au moyen d'un moyen d'entraînement ou de déplacement
- fermer la chambre d'infusion (02), notamment l'ouverture (07) de la chambre d'infusion (02), au moyen d'une tête d'infusion (05) qui, lors du déplacement de la chambre d'infusion (02) dans la position de rinçage, est au moins partiellement insérée dans l'ouverture (07) de la chambre d'infusion (02), de préférence avec un piston d'infusion (08) saillant,
- rincer la chambre d'infusion (02) fermée avec un fluide de rinçage, de préférence de l'eau, une ouverture (18) de sortie de fluide qui est disposée dans la tête d'infusion (05), notamment sur un côté frontal du piston d'infusion (08), et qui est prévue de manière à interagir avec une soupape (19) de pression ou de surpression étant ouverte, ladite soupape (19) de pression ou de surpression s'ouvrant lorsqu'une pression limite est atteinte à l'intérieur d'une chambre d'infusion (02) fermée et permettant au fluide de s'écouler de la chambre d'infusion (02),
**caractérisé en ce que**
la soupape (19) de pression ou de surpression est conçue de manière à interagir avec un mécanisme d'ouverture (26) mécanique pour le manoeuvre positive d'ouverture de la soupape (19) de pression ou de surpression indépendamment de la pression dans la chambre d'infusion (02), la chambre d'infusion (02), lorsque la quantité d'un substrat de boisson est inférieure à une quantité minimale, venant en contact avec une surface de déclenchement (24) du mécanisme d'ouverture (26) lorsque la chambre d'infusion (02) est déplacée dans la direction de la position de rinçage avant que la position de rinçage soit atteinte et effectuant une transmission de force de la chambre d'infusion (02) sur le mécanisme d'ouverture (26) via la surface de déclenchement (24) lorsque la chambre d'infusion (02) est déplacée davantage dans la direction de la position de rinçage de manière que la soupape (19) de pression ou de surpression est transférée dans une position de manoeuvre positive d'ouverture indépendante d'une pression lorsque la position de rinçage de la chambre d'infusion (02) est atteinte.

14. Procédé selon la revendication 13,
**caractérisé en ce que**
la tête d'infusion (05) reste immobile dans une position fixe par rapport à l'unité d'infusion lorsque la chambre d'infusion (02) est transférée dans la position de rinçage.

15. Procédé selon la revendication 13 ou 14,
**caractérisé en ce que**
lorsque la chambre d'infusion (02) est transférée dans la position de rinçage, le mécanisme d'ouverture (26) agit sur un support de soupape (20) de la soupape (19) de pression ou de surpression, qui est précontraint avec des moyens de ressort (29) et, de préférence, disposé dans la tête d'infusion (05), et, notamment dans ce processus, meut le support de soupape (20) contre une précontrainte des moyens de ressort (29) et soulève, de cette façon, un corps de soupape (21) relié au support de soupape (20) d'un siège de soupape (22) qui est, de préférence, formé par une surface frontale intérieure d'un piston d'infusion (08).

16. Procédé selon l'une quelconque des revendications 13 à 15,
**caractérisé en ce que**
la transmission de force du mécanisme d'ouverture (26) sur le support de soupape (20) entraîne directement, notamment sans déviation, un déplacement du support de soupape (20) contre la précontrainte des moyens de ressort (29).

17. Procédé selon l'une quelconque des revendications 13 à 16,
**caractérisé en ce que**
l'unité de vilebrequin (04) et/ou le support (01) de la chambre d'infusion prennent la même position ou les mêmes positions pour atteindre la position de rinçage et pour atteindre la position d'infusion.
